# EUROPÄISCHE PATENTANMELDUNG

(11) **EP 4 516 584 A1**
(43) Veröffentlichungstag der Anmeldung: **05.03.2025**
(21) Anmeldenummer: 24195389.2
(22) Anmeldetag: 20.08.2024
(51) Int. Cl.: B60P 1/04, B22D 41/04, B22D 41/06, B22D 41/12

(54) **KIPPVORRICHTUNG FÜR EINEN ABSETZBAREN BEHÄLTER**

(30) Priorität: 25.08.2023 DE 102023208151
(71) Anmelder: KAMAG Transporttechnik GmbH & Co. KG, 89079 Ulm (DE)
(72) Erfinder: Rapp, Gerhard, 89180 Berghülen (DE)
(74) Vertreter: Ullrich & Naumann PartG mbB

(57) **Zusammenfassung**

Eine Kippvorrichtung für einen absetzbaren Behälter, welcher zur Aufnahme von mindestens 40 Tonnen, vorzugsweise von mindestens 50 Tonnen, Flüssigmetall und/oder Schlacke, insbesondere von Flüssigmetall und/oder Schlacke mit einer Temperatur von 700°C bis 1250°C, vorzugsweise von 800°C bis 1200°C ausgebildet ist, die beabstandet voneinander angeordnete, jeweils um ein Gelenk (12) schwenkbare Kipparme (11a, 11b) aufweist, wobei an jedem dem entsprechenden Gelenk (12) abgewandten Ende der Kipparme (11a, 11b) jeweils eine Aufnahme (20) für den absetzbaren Behälter (B1, B2) vorgesehen ist, in welche Aufnahmeelemente (15a, 15b) des Behälters (B1, B2) aufnehmbar sind, ist dadurch gekennzeichnet, dass mindestens ein Kipparm (11a, 11b) der Kippvorrichtung (10) eine an ihm beweglich angeordnete Aufnahmeeinheit (21a, 31a, 41a, 51a; 21b, 31b, 41b, 51b) aufweist, durch welche der Abstand der Aufnahmen (20) der Kipparme (11a, 11b) von einer ersten Aufnahmeweite der Kippvorrichtung (10) in mindestens eine weitere Aufnahmeweite veränderbar ist. Des Weiteren sind eine Transportvorrichtung mit einer Kippvorrichtung (10) sowie ein Transportsystem mit einer solchen Transportvorrichtung und mindestens einem absetzbaren Behälter (B1, B2) angegeben.

## Beschreibung

Die Erfindung betrifft eine Kippvorrichtung für einen absetzbaren Behälter, die beabstandet voneinander angeordnete, jeweils um ein Gelenk schwenkbare Kipparme aufweist, wobei an jedem dem entsprechenden Gelenk abgewandten Ende der Kipparme jeweils eine Aufnahme für den absetzbaren Behälter vorgesehen ist, in welche Aufnahmeelemente des Behälters aufnehmbar sind.

Eine derartige Kippvorrichtung sowie ein diese verwendendes Transportfahrzeug, insbesondere ein Schwerlast-Transportfahrzeug wie ein Transportfahrzeug für einen metallurgischen Transportbehälter wie einen Schlackenkübel, in der Fachsprache als "Schlackentransporter" bezeichnet, sind aus der DE 299 15 549 U1 und der DE 100 08 637 A1 bekannt. In diesen Druckschriften ist jeweils ein Transportfahrzeug für einen Transportbehälter beschrieben, welches an seinem in Fahrtrichtung hinteren Ende die vorstehend beschriebene Kippvorrichtung aufweist. Jede der beiden Kipparme der bekannten Kippvorrichtung ist über ein Gelenk am Rahmen des Transportfahrzeugs befestigt, wobei Einrichtungen wie Hydraulikzylinder vorgesehen sind, welche eine Kippbewegung der beiden Kipparme ermöglichen. An dem Gelenk gegenüberliegenden Enden weisen die beiden Kipparme jeweils eine Aufnahme auf, über die der zu transportierende Behälter in die Kippvorrichtung einsetzbar ist. In der Regel werden hierzu Aufnahmeklauen verwendet, welche vom Behälter diametral abstehende Transportzapfen aufnehmen.

Die von der bekannten Kippvorrichtung aufzunehmenden Lasten sind, insbesondere im metallurgischen Sektor, sehr hoch, Lasten von mehr als hundert Tonnen sind dabei durchaus üblich. Dies bedingt, dass die Kippvorrichtung und der zu transportierende Behälter genau aufeinander abgestimmt werden müssen, um derartige Lasten sicher aufnehmen und transportieren zu können: Die Kippvorrichtung ist daher in der Regel auf genau eine einzige Behältergeometrie oder bestenfalls auf sehr ähnlich Behältergeometrien ausgelegt. Insbesondere der Abstand zwischen den beiden Kipparmen ist auf den Durchmesser des zu transportierenden Behälters ausgelegt, da der Abstand zwischen der Behälteraußenwand und den Aufnahmeklauen einerseits möglichst gering sein soll, um unerwünschte Biegemomente, die ansonsten auf die Transportzapfen einwirken würden, zu vermeiden. Andererseits muss zwischen der Behälteraußenwand und der Innenseite der Kipparme ein hinreichend großer Platz vorhanden sein, um ein einfaches Aufnehmen, Schwenken, Absetzen und gegebenenfalls Entleeren des in der Kippvorrichtung des Transportfahrzeugs aufgenommenen Behälters zu gewährleisten. Aus vorgenannten Gründen war es daher bis jetzt in der Regel nicht möglich, in ein und derselben Kippvorrichtung unterschiedliche Behälter, insbesondere Behälter mit unterschiedlichen Durchmessern, aufzunehmen.

Von Seiten der Anwender derartiger Kippvorrichtungen sowie von mit diesen Kippvorrichtungen ausgestatteter Transportfahrzeuge besteht aber das steigende Bedürfnis, nicht zuletzt aus Kostengründen mit einem bestimmten Transportfahrzeug und folglich mit einer bestimmten Kippvorrichtung auch Behälter mit einem geringeren Durchmesser als demjenigen, für welchen die Kippvorrichtung konstruiert wurde, transportieren zu können. Die Verlängerung der Transportzapfen des Behälters ist aus vorgenannten Gründen kein gangbarer Weg, da hierdurch der Abstand zwischen den Ansatzpunkten der Transportzapfen an der Behälteraußenwand und den diese Transportzapfen aufnehmenden Aufnahmeklauen der Kippvorrichtung vergrößert würde, wodurch dann auf die Transportzapfen hohe Biegemomente einwirken würden.

Es ist daher Aufgabe der vorliegenden Erfindung, eine Kippvorrichtung der eingangs genannten Art derart weiterzubilden, dass in ihr mindestens zwei Behälter mit unterschiedlicher Geometrie, insbesondere mit unterschiedlicher Spannweite aufgenommen werden können. Auch sollen ein Transportfahrzeug und ein Transportsystem geschaffen werden, welche sich hierfür besonders eignen.

Diese Aufgabe wird durch die erfindungsgemäße Kippvorrichtung dadurch gelöst, dass mindestens ein Kipparm der Kippvorrichtung eine an ihm beweglich angeordnete Aufnahmeeinheit aufweist, durch welche der Abstand der Aufnahmen der Kipparme, insbesondere in axialer Richtung der Kippvorrichtung, von einer ersten Aufnahmeweite der Kippvorrichtung in mindestens eine weitere Aufnahmeweite veränderbar ist.

Das erfindungsgemäße Transportfahrzeug zeichnet sich dadurch aus, dass die Kippvorrichtung wie vorstehend definiert ausgebildet ist.

In Bezug auf das Transportsystem wird die voranstehende Aufgabe gelöst durch ein Transportsystem mit einer erfindungsgemäßen Transportvorrichtung und einem absetzbaren Behälter, welcher zur Aufnahme von mindestens 40 Tonnen, vorzugsweise von mindestens 50 Tonnen Flüssigmetall und/oder Schlacke, insbesondere von Flüssigmetall und/oder Schlacke mit einer Temperatur von 700°C bis 1250°C, vorzugsweise von 800°C bis 1200°C, ausgebildet ist.

In vorteilhafter Weise kann der Behälter eine Aufnahmevolumen von mindestens 12 m³ aufweisen. Dadurch ist der Behälter ausreichend dimensioniert, um in der Stahlindustrie eingesetzt zu werden. Vorzugweise könnte der Behälter ein Aufnahmevolumen im Bereich von 12 m³ bis 70m³ aufweisen.

In weiter vorteilhafter Weise könnte der Behälter aus Gusseisen ausgebildet sein. Sofern der Behälter aus Gusseisen gegossen ist, hat dies den Vorteil, dass der Behälter dazu geeignet ist, die heiße Schlacke bzw. das heiße Flüssigmetall aufzunehmen, ohne beschädigt zu werden.

In besonders vorteilhafter Weise könnte der Behälter zumindest bereichsweise eine Wandstärke im Bereich von 0,05 m bis 0,20 m, vorzugsweise von 0,1 m bis 0,2 m, aufweisen. Eine entsprechend dimensionierte Wandstärke gewährleistet, dass der Behälter ausreichend hitzebeständig ist, insbesondere, wenn der Behälter zusätzlich aus Gusseisen hergestellt ist. Insofern kann diese Wandstärke in dem Bereich des Behälters vorliegen, der mit der Schlacke bzw. dem Flüssigmetall in Kontakt steht, wenn diese in den Behälter eingefüllt sind. Es ist jedoch auch denkbar, dass der gesamte Behälter mit einer Wandstärke im beanspruchten Bereich ausgebildet ist.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden anhand der Figuren beschrieben werden. Es zeigen:
- Figur 1: eine Ausführungsform eines Transportfahrzeugs mit einem ersten Ausführungsbeispiel der Kippvorrichtung,
- Figuren 2a, 2b: eine schematische Darstellung eines ersten Behälters,
- Figuren 3a, 3b: eine schematische Darstellung eines zweiten Behälters,
- Figuren 4a, 4b: eine perspektivische Darstellung des ersten Ausführungsbeispiels der Kippvorrichtung mit dem Behälter der Figuren 2a und 2b,
- Figuren 5a, 5b: eine perspektivische Darstellung des ersten Ausführungsbeispiels der Kippvorrichtung mit dem Behälter der Figuren 3a und 3b,
- Figuren 6a, 6b: eine perspektivische Darstellung einer Aufnahmeeinheit des ersten Ausführungsbeispiels in zwei unterschiedlichen Arbeitspositionen,
- Figuren 7a-7f: eine schematische Darstellung des Wechselvorgangs zwischen der ersten und der zweiten Arbeitsposition der Kippvorrichtung,
- Figuren 8a-8c: eine weitere Ausführungsform einer Aufnahmeeinheit des ersten Ausführungsbeispiels in drei unterschiedlichen Arbeitspositionen,
- Figuren 9a, 9b: eine perspektivische Darstellung eines zweiten Ausführungsbeispiels der Kippvorrichtung mit dem Behälter der Figuren 2a und 2b,
- Figuren 10a, 10b: eine perspektivische Darstellung des zweiten Ausführungsbeispiels der Kippvorrichtung mit dem Behälter der Figuren 3a und 3b,
- Figuren 11a, 11b: eine perspektivische Darstellung einer Aufnahmeeinheit des zweiten Ausführungsbeispiels in zwei unterschiedlichen Arbeitspositionen,
- Figuren 12a, 12b: eine perspektivische Darstellung eines dritten Ausführungsbeispiels der Kippvorrichtung mit dem Behälter der Figuren 2a und 2b,
- Figuren 13a, 13b: eine perspektivische Darstellung des dritten Ausführungsbeispiels der Kippvorrichtung mit dem Behälter der Figuren 3a und 3b,
- Figur 14: eine perspektivische Darstellung einer Aufnahmeeinheit des dritten Ausführungsbeispiels,
- Figuren 15a, 15b: eine perspektivische Darstellung eines vierten Ausführungsbeispiels der Kippvorrichtung mit dem Behälter der Figuren 2a und 2b,
- Figuren 16a, 16b: eine perspektivische Darstellung des vierten Ausführungsbeispiels der Kippvorrichtung mit dem Behälter der Figuren 3a und 3b,
- Figuren 17a, 17b: eine perspektivische Darstellung einer Aufnahmeeinheit des vierten Ausführungsbeispiels in zwei unterschiedlichen Arbeitspositionen,

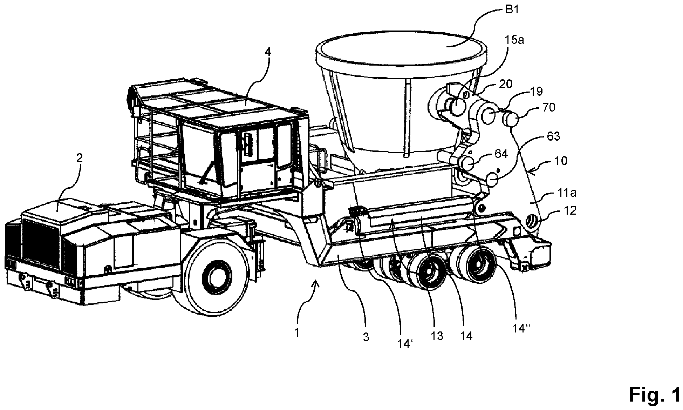

Die Figur 1 zeigt nun eine Ausführungsform eines allgemein mit 1 bezeichneten Transportfahrzeugs mit einem ersten Ausführungsbeispiel einer Kippvorrichtung 10 für einen absetzbaren Behälter B1, welcher zur Aufnahme von mindestens 40 Tonnen, vorzugsweise von mindestens 50 Tonnen, Flüssigmetall und/oder Schlacke, insbesondere von Flüssigmetall und/oder Schlacke mit einer Temperatur von 700°C bis 1250°C, vorzugsweise von 800°C bis 1200°C, ausgebildet ist. Ein derartiges Transportfahrzeug 1 ist an und für sich bekannt und soll daher nachfolgend nur insoweit beschrieben werden, als dies für das Verständnis des konstruktiven Aufbaus und der Funktionsweise der Kippvorrichtung 10 erforderlich ist. Das Transportfahrzeug 1 weist eine Antriebseinheit 2 auf, die mit einem Fahrzeugrahmen 3 verbunden ist. Der Fahrzeugrahmen 3 trägt eine Fahrerkabine 4. Der Fahrzeugrahmen 3 ist im hier gezeigten Ausführungsbeispiel als ein U-förmiger Rahmen ausgebildet, in dessen freien Innenbereich der vom Transportfahrzeug 1 zu transportierende Behälter B1 aufnehmbar ist. Derartige nach einer sogenannten "U-Rahmen-Bauweise" ausgebildete Transportfahrzeuge sind bekannt. Dem Fachmann ist aber aus nachfolgender Beschreibung ersichtlich, dass es auf die genaue Ausgestaltung des Transportfahrzeugs 1 nicht ankommt, das Transportfahrzeug 1 kann z. B. auch als ein sogenannter "Plattform-Transporter" ausgebildet sein, auf dessen Plattform der Behälter B1 abgesetzt wird. Wesentlich ist, dass das Transportfahrzeug 1 dazu ausgebildet ist, einen absetzbaren Behälter, welcher zur Aufnahme von mindestens 40 Tonnen, vorzugsweise von mindestens 50 Tonnen, Flüssigmetall und/oder Schlacke, insbesondere von Flüssigmetall und/oder Schlacke mit einer Temperatur von 700°C bis 1250°C, vorzugsweise von 800°C bis 1200°C dient, aufzunehmen,

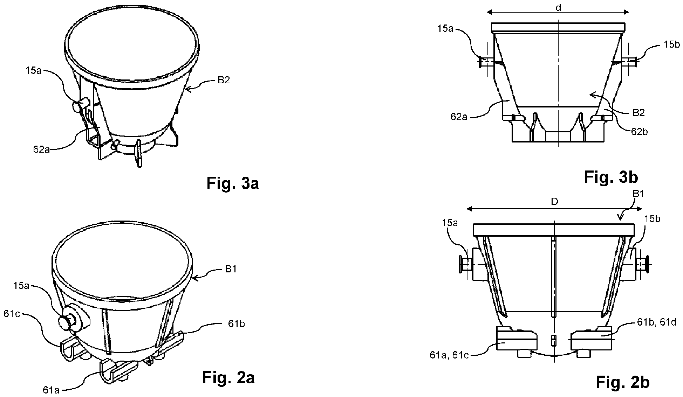

Die am Fahrzeugrahmen 3 befestigte Kippvorrichtung 10 weist zwei Kipparme 11a und 11b auf, von denen in Figur 1 nur der in Fahrtrichtung linke Kipparm 11a zu sehen ist. Der zweite Kipparm 11b ist entsprechend ausgebildet, wie aus den Figuren 3a und 3b ersichtlich ist. Jeder Kipparm 11a, 11b ist an seinem ersten Endbereich über ein Gelenk 12 schwenkbar mit dem Fahrzeugrahmen 3 verbunden. Für die Schwenkbewegung der Kipparme 11a, 11b dient eine Betätigungseinrichtung 13, die im hier gezeigten Fall als ein Hydraulikzylinder 14 ausgebildet, der mit seinem ersten Ende 14' am Fahrzeugrahmen 3 und mit seinem zweiten Ende 14" jeweils am Kipparm 11a, 11b befestigt ist, so dass durch ein Ausfahren und Einziehen der Kolbenstange der Hydraulikzylinder 14 eine Schwenkbewegung der Kipparme 11a, 11b jeweils um das Gelenk 12 durchführbar ist. An seinem dem Gelenk 12 gegenüberliegenden zweiten Endbereich weist jeder Kipparm 11a, 11b eine Aufnahme 20 auf, über die der Behälter B in der Kippvorrichtung 10 aufnehmbar ist. Ein derartiger Aufbau ist bekannt und muss daher nicht mehr weiter im Detail erläutert werden.

Bevor nun die Funktion und die konstruktive Ausgestaltung der hier vorgesehenen Kippvorrichtung 10 und insbesondere der Aufnahme 20 erläutert wird, soll der einfacheren Erläuterung halber anhand der Figuren der grundlegende Aufbau von zwei Behältern B1 und B2 erläutert werden, welche - in der Axialrichtung der Kippvorrichtung 10 gesehen - einen unterschiedlich großen Durchmesser besitzen, wobei aber die Kippvorrichtung 10 - wie nachstehend beschrieben - derart ausgelegt sein soll, dass sowohl der größere Behälter B1 als auch der kleinere Behälter B2 mit der beschriebenen Kippvorrichtung 10 transportiert werden kann.

Die Behälter B1, B1 bzw. ein erfindungsgemäßer Behälter dienen zur Aufnahme von mindestens 40 Tonnen, vorzugsweise von mindestens 50 Tonnen, Flüssigmetall und/oder Schlacke, insbesondere von Flüssigmetall und/oder Schlacke mit einer Temperatur von 700°C bis 1250°C, vorzugsweise von 800°C bis 1200°C. Vorzugsweise könnte der Behälter B1, B2 jeweils ein Aufnahmevolumen von mindestens 12 m³ aufweisen und als Gussteil ausgebildet sein bzw. aus Gusseisen ausgebildet sein. Des Weiteren könnten die Behälter B1, B2 jeweils zumindest bereichsweise eine Wandstärke im Bereich von 0,05 m bis 0,20 m, vorzugsweise von 0,1 m bis 0,2 m aufweisen, insbesondere in dem Bereich des Behälters B1, B2, welcher mit der Schlacke bzw. dem Flüssigmetall beim Transport in Kontakt steht.

Die Figuren 2a und 2b zeigen einen ersten Behälter B1, der hier kübelförmig ausgebildet ist und z. B. im Bereich der Metallurgie zum Transport von geschmolzenem Metall (Flüssigmetall) oder von Schlacke dient, welche eine Temperatur von 700°C bis 1250°C, vorzugsweise von 800°C bis 1200°C, aufweisen können. Dem Fachmann ist wiederum aus nachfolgender Beschreibung ersichtlich, dass es auf die genaue Form des Behälters B1 nicht ankommt, eine kübelförmige Ausgestaltung ist daher nicht zwingend, mit der beschriebenen Kippvorrichtung 10 können auch quaderförmige Behälter, wie sie z. B. bei Muldenkippern eingesetzt werden, verwendet werden. Der Behälter B1 besitzt in an und für sich bekannter Art und Weise von seiner Außenwand diametral abstehende Aufnahmeelemente 15a, 15b, die im hier gezeigten Fall als Aufnahmezapfen ausgebildet sind. Über diese Aufnahmeelemente 15a, 15b kann der Behälter B1 in der Kippvorrichtung 10 aufgenommen werden, indem seine Aufnahmeelemente 15a, 15b in die Aufnahmen 20 der Kipparme 11a, 11b der Kippvorrichtung 10 eingebracht werden. Wie aus der Figur 2b ersichtlich, weist der erste Behälter B1 eine Spannweite D auf. Um nun den Behälter B1 in der Kippvorrichtung 10 aufnehmen zu können, ist es erforderlich, dass der Abstand der beiden Kipparme 11a, 11b der Spannweite D des Behälters B1 entspricht, d. h. dass die Aufnahmen 20 einen der Spannweite D des Behälters B1 entsprechenden Abstand voneinander aufweisen.

Die Figuren 3a und 3b zeigen nun einen zweiten Behälter B2, der im Wesentlichen wie der erste Behälter B1 ausgebildet ist. Wie aus der Figur 3b ersichtlich, weist der zweite Behälter B2 aber nur eine Spannweite d auf, welche geringer als die Spannweite D des ersten Behälters B1 ist. Ein derartiger zweiter Behälter B2 konnte bis jetzt in den bekannten Kippvorrichtungen 10 nicht aufgenommen werden, da - wie eingangs ausgeführt - die konstruktive Ausgestaltung der Kippvorrichtungen 10 auf die Geometrie der zu transportierenden Behälter B1 bzw. B2 abgestimmt sein musste.

Um nun mit der beschriebenen Kippvorrichtung 10 und somit dem diese Kippvorrichtung 10 verwendenden Transportfahrzeug 1 Behälter unterschiedlicher Spannweite, im hier gezeigten Fall sowohl den ersten Behälter B1 mit einer Spannweite D als auch den zweiten Behälter B2 mit einer Spannweite d, transportieren zu können, sind bei der Kippvorrichtung 10 nun die nachfolgend beschriebenen Ausgestaltungen der Aufnahmen 20 vorgesehen.

All den nachfolgend beschriebenen Ausführungsbeispielen ist gemeinsam, dass die Kippvorrichtung 10 derart ausgebildet ist, dass der Abstand der Aufnahmen 20 der beiden Kipparme 11a, 11b in der axialen Richtung der Kippvorrichtung 10, also die Aufnahmeweite der Kippvorrichtung 10, veränderbar ist, so dass durch diese Abstandsänderung die Aufnahmeweite der Kippvorrichtung 10 der Spannweite D bzw. d des jeweils aufzunehmenden Behälters B1 bzw. B2 anpassbar ist. Die Aufnahmen 20 der beiden Kipparme 11a, 11b können also bei der beschriebenen Kippvorrichtung 10 aneinander angenähert oder voneinander entfernt werden, so dass hierdurch die Aufnahmeweite der Kippvorrichtung 10 der Spannweite D bzw. d des aufzunehmenden Behälters B1 bzw. B2 angepasst werden kann.

Diese vorteilhafte Verstellmöglichkeit der Aufnahmeweite der Kippvorrichtung 10 wird nun bei der beschriebenen Kippvorrichtung 10 dadurch erreicht, dass die Aufnahmen 20 der Kipparme 11a, 11b nicht - wie bei den bekannten Kippvorrichtungen 10 - als unbewegliche, starr mit den Kipparmen 11a, 11b verbundene oder als integraler Bestandteil derselben ausgeführte Aufnahmeklauen ausgebildet sind. Vielmehr ist vorgesehen, dass die Aufnahmen 20 beweglich an den Kipparmen 11a, 11b angeordnet sind, so dass durch eine entsprechende Verstellbewegung der Aufnahmen 20 die vorstehend angesprochene Veränderung der Aufnahmeweite der Kippvorrichtung 10 und somit eine Anpassung auf den Durchmesser des jeweils aufzunehmenden Behälters B1 und B2 ermöglicht ist.

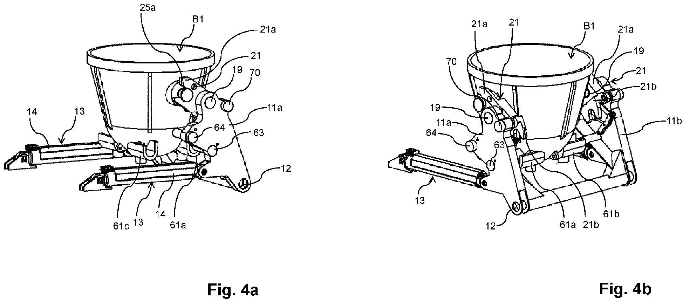

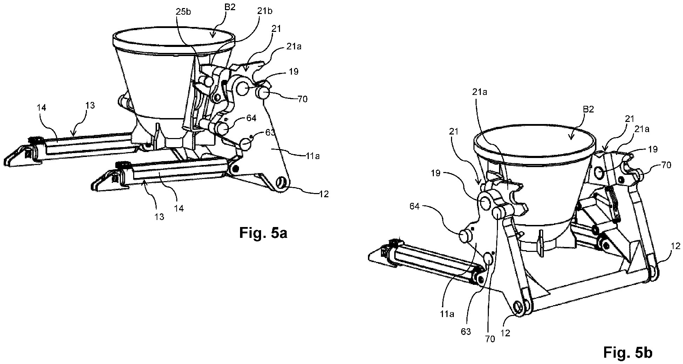

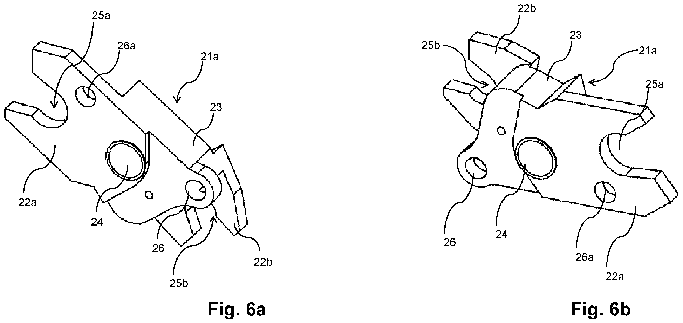

Bei dem in den Figuren 4a, 4b und 5a, 5b dargestellten ersten Ausführungsbeispiel der Kippvorrichtung 10 ist vorgesehen, dass an den beiden Aufnahmeenden der Kipparme 11a, 11b als Aufnahme 20 jeweils eine rotierbare Aufnahmeeinheit 21a, 21b, wie sie in den Figuren 6a und 6b dargestellt und weiter unten noch näher beschrieben wird, angeordnet ist. Die Figuren 4a und 4b zeigen die Kippvorrichtung 10 zusammen mit dem ersten Behälter B1 mit der größeren Spannweite D und die Figuren 5a und 5b dieselbe Kippvorrichtung 10 mit dem kleineren Behälter B2, welcher die kleinere Spannweite aufweist. Die beim ersten Ausführungsbeispiel an dem Aufnahmeende der beiden Kipparme 11a, 11b vorgesehene Aufnahmeeinheit 21a ist in den Figuren 6a und 6b dargestellt, wobei die Figur 6a die Aufnahmeeinheit 21a in ihrer zum Transport des ersten Behälters B1 dienenden Arbeitsposition und die Figur 6b die Aufnahmeeinheit 21a in derjenigen Arbeitsposition zeigt, wie sie beim Transport des zweiten Behälters B2 gegeben ist. Jede der beiden Aufnahmeeinheiten 21a, 21b ist um eine Lagerachse 19 der Kippvorrichtung 10 rotierbar, die parallel zu der durch die Aufnahmeelemente 15a, 15b des jeweils einzusetzenden Behälters B1 oder B2 definierten Rotationsachse verläuft. Im "normalen" Fahrbetrieb des Transportfahrzeugs 1 verläuft also diese Rotationsachse der beiden Aufnahmeeinheiten 21a, 21b in einer waagerechten und zur Längsachse des Transportfahrzeugs 1 orthogonalen Richtung.

Bevor nun anhand der Figuren 4a, 4b und 5a, 5b die Funktion einer derart ausgebildeten Kippvorrichtung 10 beschrieben wird, wird anhand der Figuren 6a, 6b der geometrisch-konstruktive Aufbau der Aufnahmeeinheit 21, der Aufnahmeeinheit 21a beschrieben. Der Aufbau der zweiten Aufnahmeeinheit 21b ist dann entsprechend.

Die Aufnahmeeinheit 21a weist als Aufnahmeelemente eine erste Aufnahmeklaue 22a und eine zweite Aufnahmeklaue 22b auf, welche vorzugsweise an einem gemeinsamen Grundkörper 23 der Aufnahmeeinheit 21a angeordnet und weiter vorzugsweise als integrale Bestandteile dieses Grundkörpers 23 ausgebildet sind. Im Grundkörper 23 ist eine Öffnung 24 angeordnet, durch welche jeweils die Lagerachse 19 durchführbar ist, so dass auf diese Weise die Aufnahmeeinheit 21a - wie vorstehend beschrieben drehbar - am Kipparm 11a befestigbar ist. Die erste Aufnahmeklaue 22a der beiden Aufnahmeeinheiten 21a, 21b dienen - wie nachstehend beschrieben - zur Aufnahme des eine größere Spannweite D aufweisenden ersten Behälters B1, während die zweite Aufnahmeklaue 22b zur Aufnahme des die hierzu kleinere Spannweite d aufweisenden zweiten Behälters B2 dienen. Wie aus den vorgenannten Figuren ersichtlich ist, ist die zweite Aufnahmeklaue 22b nicht in der Ebene der ersten Aufnahmeklaue 22a angeordnet, sondern in axialer Richtung der Aufnahmeeinheit 21a, also in Richtung der Lagerachse 19, nach innen versetzt. Der Abstand zwischen der ersten Aufnahmeklaue 22a und der zweiten Aufnahmeklaue 22b beträgt etwa die Hälfte der Differenz zwischen der für die Aufnahme des ersten Behälters B1 erforderlichen ersten Aufnahmeweite der Kippvorrichtung 10 und der für die Aufnahme des zweiten Behälters B2 erforderlichen, kleineren zweiten Aufnahmeweite. Ist die erste Aufnahmeeinheit 21a am Kipparm 11a und die zweite Aufnahmeeinheit 21b am zweiten Kipparm 11b montiert, und befinden sich die beiden Aufnahmeeinheiten 21a, 21b in ihrer in Figur 6a gezeigten Stellung, so entspricht der Abstand der beiden Aufnahmeeinheiten 21a, 21b der ersten Aufnahmeweite der Kippvorrichtung 10. Werden dann die beiden Aufnahmeeinheiten 21a, 21b um die Lagerachsen 19 rotiert, so dass die Aufnahmeeinheiten 21a, 21b in ihre in Figur 6b gezeigte zweite Arbeitsposition gelangen, so ist der Abstand der beiden Aufnahmeklauen 22b der Aufnahmeeinheiten 21a, 21b im Wesentlichen gleich der zweiten Aufnahmeweite der Kippvorrichtung 10. Durch die vorstehend beschriebene Ausgestaltung der Aufnahmeeinheiten 21a, 21b mit in axialer Richtung zueinander versetzten Aufnahmeklauen 22a, 22b und der entsprechenden bewegbaren Anordnung der Aufnahmeeinheiten 21a, 21b an ihren Kipparmen 11a, 11b ist es somit in einfacher Art und Weise möglich, sowohl den ersten Behälter B1, der die erste Aufnahmeweite der Kippvorrichtung 10 erfordert, als auch den zweiten Behälter B2, der die kleinere zweite Aufnahmeweite der Kippvorrichtung 10 erfordert, in ein und derselben Kippvorrichtung 10 aufzunehmen. Dies wird nachstehend anhand der Figuren 4a, 4b und 5a, 5b erläutert:
Die Figuren 4a, 4b zeigen die Kippvorrichtung 10 zusammen mit dem in ihr aufgenommenen ersten Behälter B1, also dem Behälter mit der größeren Spannweite D in der ersten bzw. der zweiten Arbeitsposition der Aufnahmeeinheiten 21a, 21b. Die beiden Aufnahmeeinheiten 21a und 21b sind dabei derart an den beiden Kipparmen 11a, 11b angeordnet, dass in einer an und für sich bekannten und daher nicht mehr näher beschriebenen Art und Weise der erste Behälter B1 in der Kippvorrichtung 10 aufgenommen werden kann, indem die Aufnahmeelemente 15a, 15b in Aufnahmeöffnungen 25a der ersten Aufnahmeklauen 22a eingebracht werden. Befinden sich die beiden Aufnahmeeinheiten 21a, 21b also in dieser ersten Arbeitsposition, besitzt die Kippvorrichtung 10 - wie vorstehende beschrieben - eine erste Aufnahmeweite, die auf den ersten Behälter B1 mit der Spannweite D abgestimmt ist.

Um nun den zweiten Behälter B2, welcher gegenüber dem ersten Behälter B1 eine kleinere Spannweite d besitzt, in die Kippvorrichtung 10 aufzunehmen, werden die beiden Aufnahmeeinheiten 21a, 21b jeweils um ihre Lagerachse 19 rotiert, bis die zweiten Aufnahmeklauen 22b in einer für die Aufnahme des zweiten Behälters B2 geeigneten Position liegen, in welcher die Aufnahmeelemente 15a, 15b des zweiten Behälters B2 in Aufnahmeöffnungen 25b der zweiten Aufnahmeklauen 22b eingebracht werden können. Da - wie vorstehend beschrieben - die zweiten Aufnahmeklauen 22b der beiden Aufnahmeeinheiten 21a, 21b in axialer Richtung der beiden Aufnahmeeinheiten 21a, 21b nach innen versetzt angeordnet sind, besitzt dann die Kippvorrichtung 10 eine gegenüber der ersten Position der Aufnahmeeinheiten 21a, 21b geringere Aufnahmeweite, welche auf den zweiten Behälter B2 abgestimmt ist.

Die vorstehend beschrieben Ausgestaltung der Aufnahmen 20 der beiden Kipparme 11a, 11b der Kippvorrichtung 10 erlaubt es somit in einfacher Art und Weise, durch eine entsprechende Bewegung der Aufnahmeeinheiten 21a, 21b die Aufnahmeweite der Kippvorrichtung 10 zu verändern, so dass in ein und dieselbe Kippvorrichtung 10 sowohl der erste Behälter B1 mit einer Spannweite D als auch der zweite Behälter B2 mit einer kleineren Spannweite d aufgenommen werden kann.

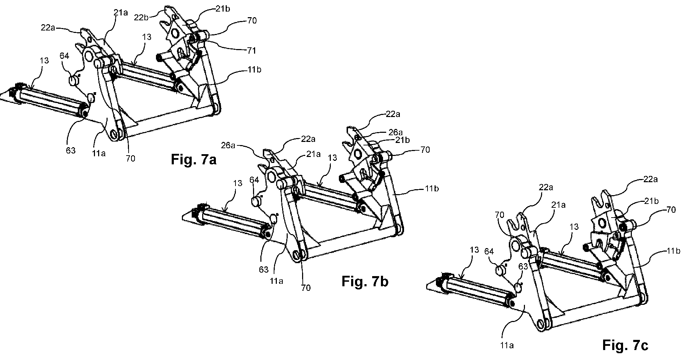

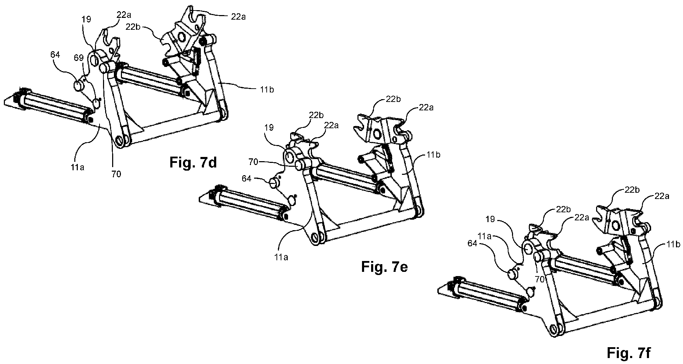

Der Wechselvorgang zwischen der ersten Aufnahmeweite und der zweiten Aufnahmeweite der Kippvorrichtung 10 ist schematisch in der Abfolge der Figuren 7a bis 7f dargestellt. In der Figur 7a befinden sich die Aufnahmeeinheiten 21a, 21b der Aufnahmen 20 der Kipparme 11a, 11b in ihrer ersten Arbeitsposition. Man erkennt aus den Figuren 7a bis 7c deutlich, dass in dieser ersten Arbeitsposition jeweils die ersten Aufnahmeklauen 22a - in axialer Richtung gesehen - außen liegen. Die Aufnahmeeinheiten 21a, 21b sind in dieser ersten Position gegen ein Verdrehen gesichert an den beiden Kipparmen 11a, 11b angeordnet. Hierzu weist jeder Kipparm 11a, 11b eine entsprechende Verdrehsicherung 70 auf, welche bewirkt, dass die Aufnahmeeinheiten 21a, 21b in einer definierten Position an den Kipparmen 11a, 11b festgelegt sind. Eine derartige Verdrehsicherung 70 kann z. B. dadurch ausgebildet werden, dass jeder Kipparm 11a, 11b einen Hydraulikzylinder 71 besitzt, dessen Kolbenstange (nicht gezeigt) in axialer Richtung vorschiebbar ist und dabei in eine Verriegelungsöffnung 26 der jeweiligen Aufnahmeeinheit 21a, 21b eintritt.

Soll nun die Kippvorrichtung 10 für die Aufnahme des zweiten Behälters B2 vorbereitet werden, so wird die Verriegelung der beiden drehbar an den Kipparmen 11a, 11b befestigten Aufnahmeeinheiten 21a, 21b gelöst, wie dies schematisch in den Figuren 7b und 7c dargestellt ist. Dabei wird - beim hier beschriebenen Ausführungsbeispiel - der Kolben des Hydraulikzylinders 71 aus der Öffnung 26 der beiden Aufnahmeeinheiten 21a, 21b zurückgezogen, so dass jede der beiden Aufnahmeeinheiten 21a, 21b um ihre Lagerachse 19 drehbar ist. Die beiden Aufnahmeeinheiten 21a, 21b werden dann - wie in den Figuren 7c bis 7e dargestellt - um diese Lagerachsen 19 verschwenkt, so dass - wie in Figur 7f gezeigt - letztendlich die zweiten Aufnahmeklauen 22b der beiden Aufnahmeeinheiten 21a, 21b in dieser zweiten Arbeitsposition der Kippvorrichtung 10 in der für eine Aufnahme des zweiten Behälters B2 geeigneten Aufnahmeposition liegen. Nachdem die beiden Aufnahmeeinheiten 21a, 21b wiederum verdrehsicher mit den Kipparmen 11a, 11b verbunden wurden, indem die Kolbenstangen der Hydraulikzylinder 71 jeweils in eine weitere Öffnung 26a der Aufnahmeeinheiten 21a, 21b eingebracht wurden, ist die Kippvorrichtung 10 zur Aufnahme des zweiten Behälters B2 bereit.

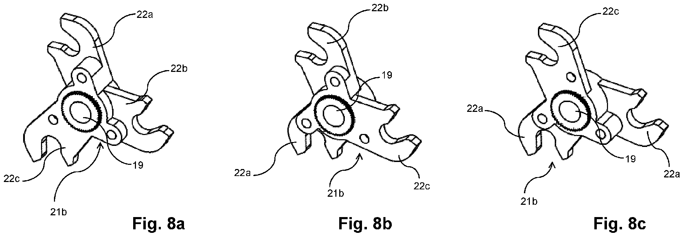

Beim vorstehend beschriebenen ersten Ausführungsbeispiel wurde davon ausgegangen, dass jede Aufnahmeeinheit 21a, 21b zwei Aufnahmeklauen 22a, 22b besitzt, so dass durch eine entsprechende Rotation der Aufnahmeklauen 22a, 22b zwei unterschiedliche Aufnahmeweiten der Kippvorrichtung 10 realisierbar sind. Es ist aber auch möglich, dass die um die Lagerachsen 19 drehbaren Aufnahmeeinheiten 21a, 21b mehr als zwei Aufnahmeklauen 22a, 22b besitzen, so dass die mit den beschriebenen Aufnahmeeinheiten 21a, 21b ausgerüstete Kippvorrichtung 10 auf mehr als zwei unterschiedliche Aufnahmeweiten einstellbar ist. Die Figuren 8a bis 8c zeigen nun eine derartige Ausführungsform der Aufnahmeeinheiten 21a, 21b, wobei in den vorgenannten Figuren die am zweiten Kipparm 11b angeordnete Aufnahmeeinheit 21b dargestellt ist. Der Aufbau der ersten Aufnahmeeinheit 21a ist dann entsprechend. Man erkennt aus den vorgenannten Figuren, dass die Aufnahmeeinheit 21b nunmehr drei Aufnahmeklauen 22a-22c besitzt, welche in Umfangsrichtung voneinander beabstandet angeordnet sind. Die Figur 8a zeigt die Aufnahmeeinheit 21b in ihrer ersten Arbeitsposition, in welcher durch die beiden Aufnahmeeinheiten 21a, 21b eine erste Aufnahmeweite der Kippvorrichtung 10 ausgebildet ist: Die erste Aufnahmeklaue 22a der Aufnahmeeinheit 21b befindet sich - in axialer Richtung gesehen - weiter außen als die zweite Aufnahmeklaue 22b und die dritte Aufnahmeklaue 22c, so dass hierdurch die größte Aufnahmeweite der Kippvorrichtung 10 ausgebildet ist. Werden nun die Aufnahmeeinheiten 21a, 21b um die Lagerachsen 19 in ihre in Figur 8b gezeigte Stellung rotiert, in der die Aufnahmeeinheiten 21a, 21b ihre zweite Arbeitsposition zur Aufnahme des zweiten Behälters B2 einnehmen, so entspricht der Abstand der zweiten Aufnahmeklauen 22b der beiden Aufnahmeeinheiten 21a, 21b der zweiten Aufnahmeweite der Kippvorrichtung 10, welche zur Aufnahme des zweiten Behälters B2 (wie vorstehend beschrieben) dient. Durch eine weitere Rotationsbewegung der Aufnahmeeinheiten 21a, 21b werden dann die in axialer Richtung am weitesten innen liegenden dritten Aufnahmeklauen 22c in die dadurch gegebene dritte Arbeitsposition der Kippvorrichtung 10 gebracht, so dass in der Kippvorrichtung ein Aufnahmebehälter mit einer kleineren Spannweite als derjenigen des zweiten Behälters B2 aufnehmbar ist.

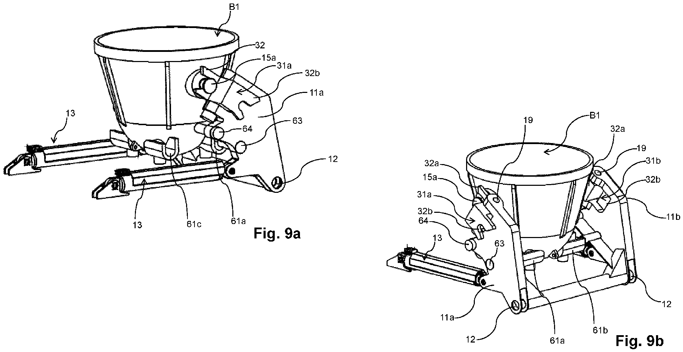

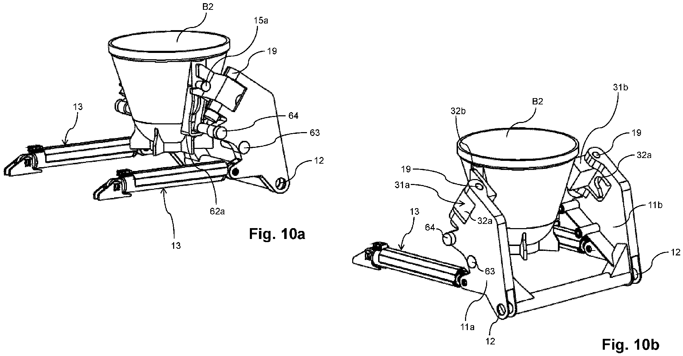

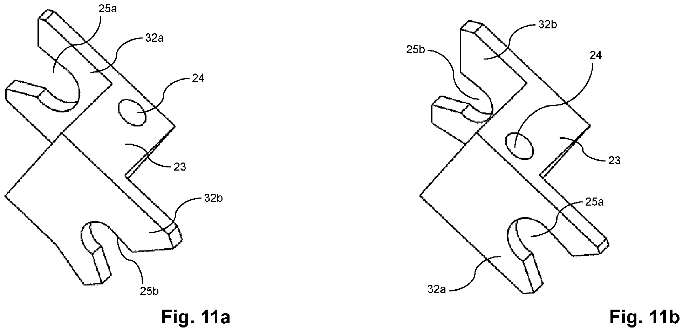

In den Figuren 9 bis 11b ist ein zweites Ausführungsbeispiel der Kippvorrichtung 10 dargestellt, wobei einander entsprechende Bauteile mit den gleichen Bezugszeichen versehen und nicht mehr erneut bezüglich ihres Aufbaus und ihrer Funktion beschrieben werden. Die Figuren 9a und 9b zeigen wiederum die Kippvorrichtung 10 zusammen mit dem ersten Behälter B1, die Figuren 10a und 10b die Kippvorrichtung 10 mit dem zweiten Behälter B2 und die Figuren 11a und 11b Aufnahmeeinheiten 31a, 31b des zweiten Ausführungsbeispiels, welche ihrer grundsätzlichen Funktion nach den Aufnahmeeinheiten 21a, 21b des ersten Ausführungsbeispiels entsprechen, nämlich dass durch eine entsprechende Ausgestaltung und beweglichen Anordnung an den Kipparmen 11a, 11b die Aufnahmeweite der Kippvorrichtung 10 von einer ersten Aufnahmeweite in eine zweite Aufnahmeweite verändert werden kann. Der wesentliche Unterschied zwischen dem ersten und zweiten Ausführungsbeispiel besteht in der Anordnung und Ausbildung der Aufnahmeeinheiten 31a, 31b: Man erkennt aus den Figuren 11a und 11b leicht, dass die Aufnahmeeinheiten 31a, 31b wiederum eine zur Aufnahme des ersten Behälters B1 bestimmte erste Aufnahmeklaue 32a und eine zur Aufnahme des zweiten Behälters B2 mit einer geringeren Spannweite d bestimmte zweite Aufnahmeklaue 32b besitzen, welche wiederum vorzugweise an einem gemeinsamen Grundkörper 33 angeordnet und vorzugsweise als integrale Bestandteile desselben ausgebildet sind. Die beiden Aufnahmeeinheiten 31a, 31b sind hakenförmig ausgebildet, wobei der Grundkörper 33 eine Lageröffnung 34 für eine Lagerachse 19, über welche die Aufnahmeeinheiten 31a, 31b an den Kipparmen 11a, 11b befestigbar sind, besitzt.

Wie nun aus den vorgenannten Figuren ersichtlich ist, ist beim zweiten Ausführungsbeispiel diese Lagerachse 19 nun nicht mehr - wie beim ersten Ausführungsbeispiel - kollinear zu der durch die Aufnahmeelemente 15a, 15b der Behälter B1, B2 definierten Rotationsachse der Kippvorrichtung 10 angeordnet, sondern sie verläuft hierzu orthogonal. Die Figuren 9a und 9b zeigen die Kippvorrichtung 10 mit dem in ihr aufgenommenen größeren Behälter B1. Man erkennt, dass sich die ersten Aufnahmeklauen 32a in der für eine Aufnahme des Behälters B1 geeigneten ersten Arbeitsposition befinden. In dieser ersten Position der Aufnahmen 20 der Kipparme 11a, 11b besitzt die Kippvorrichtung 10 somit eine für die Aufnahme des Behälters B1 mit einer Spannweite D geeignete erste Aufnahmeweite.

Die Figuren 10a und 10b zeigen die Kippvorrichtung 10 mit dem in ihr aufgenommenen zweiten Behälter B2. Man erkennt, dass sich in diesem Fall die zweiten Aufnahmeklauen 32b der Aufnahmeeinheiten 31a, 31b in der zweiten Arbeitsposition befinden. Der Übergang zwischen der ersten und der zweiten Position der Aufnahme 20 der Kippvorrichtung 10 erfolgt dabei derart, dass die Aufnahmeeinheiten 31a, 31b um ihre Lagerachsen 19 geschwenkt werden. Da der Abstand zwischen den beiden Aufnahmeklauen 32a und 32b einer jeden Aufnahmeeinheit 31a, 31b im Wesentlichen wiederum der Hälfte der Differenz zwischen der für die Aufnahme des ersten Behälters B1 erforderlichen größeren ersten Aufnahmeweite und der für die Aufnahme des kleineren zweiten Behälters B2 erforderlichen zweiten Aufnahmeweite beträgt, liegen also die zweiten Aufnahmeklauen 32b der Kipparme 11a, 11b, wie ein Vergleich zwischen den Figuren 9a, 9b und 10a, 10b zeigt, in axialer Richtung der Kippvorrichtung 10 weiter innen, die Kippvorrichtung 10 weist somit die zur Aufnahme des zweiten Behälters B2 erforderliche oder geeignete zweite Aufnahmeweite auf.

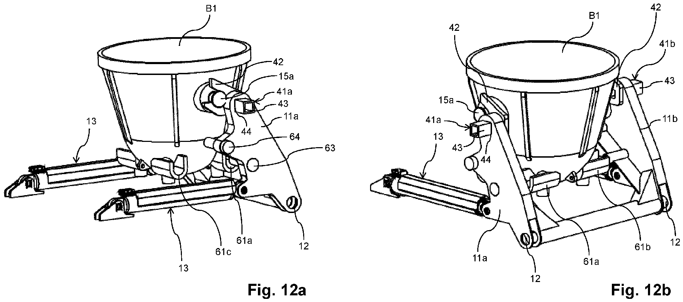

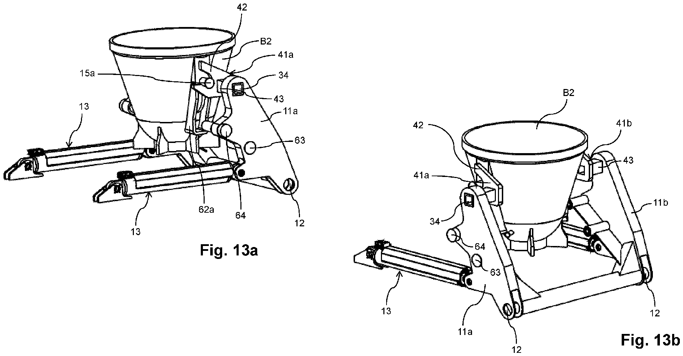

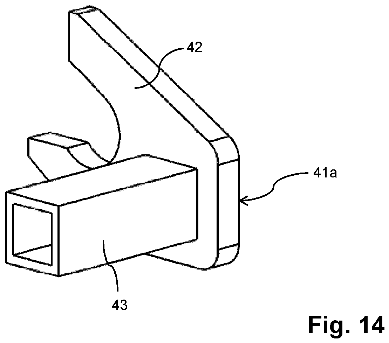

In den Figuren 12a bis 14 ist ein drittes Ausführungsbeispiel einer Kippvorrichtung 10 dargestellt. Einander entsprechende Bauteile werden wiederum mit den gleichen Bezugszeichen versehen und nicht mehr näher beschrieben. Die Figuren 12a und 12b zeigen die Kippvorrichtung 10 mit dem ersten Behälter B1, die Figuren 13a und 13b die Kippvorrichtung 10 mit dem zweiten Behälter B2 und die Figur 14 eine Aufnahmeeinheit 41a des dritten Ausführungsbeispiels in ihrer sowohl zur Aufnahme des ersten Behälters B1 als auch zur Aufnahme des zweiten Behälters B2 dienenden Arbeitsposition. Der wesentliche Unterschied zwischen den beiden ersten Ausführungsbeispielen und dem in den vorgenannten Figuren gezeigten dritten Ausführungsbeispiel der Kippvorrichtung 10 liegt wiederum in der Funktionsweise und der Ausgestaltung der an den beiden Kipparmen 11a, 11b bewegbar angeordneten Aufnahmeeinheiten 41a, 41b.

In der Figur 14 ist wiederum die im montierten Zustand linke Aufnahmeeinheit 41a dargestellt. Die am zweiten Kipparm 11b angeordnete zweite Aufnahmeeinheit 41b ist entsprechend ausgestaltet. Man erkennt aus den Figuren, dass beim dritten Ausführungsbeispiel die Aufnahmeeinheiten 41a, 41b jeweils nur eine Aufnahmeklaue 42 besitzen, welche - wie nachstehend beschrieben - sowohl zur Aufnahme des ersten Behälters B1 mit einer Spannweite D als auch des zweiten Behälters B2 mit einer Spannweite d dient.

Im Gegensatz zu den beiden ersten Ausführungsbeispielen, bei denen die Verstellbewegung der Aufnahmen 20 der Kipparme 11a, 11b jeweils durch eine rotatorische Bewegung der Aufnahmeeinheiten 21a, 21b und 31a, 31b erfolgte, ist nun im dritten Ausführungsbeispiel vorgesehen, dass zur Veränderung der Aufnahmeweite der Kippvorrichtung 10 die Aufnahmeeinheiten 41a, 41b translatorisch bewegt werden. Die Aufnahmeeinheiten 41a, 41b sind hierbei L-förmig ausgestaltet und weisen einen länglichen Grundkörper 43 auf. Jeder Kipparm 11a, 11b besitzt eine Lageröffnung 44, in welche jeweils der Grundkörper 43 der Aufnahmeeinheiten 41a, 41b verschiebbar einsetzbar ist. Vorzugsweise ist hier der Querschnitt des Grundkörpers 43 unrund, vorzugsweise viereckig oder polygonal und die Lageröffnungen 44 besitzen eine entsprechend darauf abgestimmte Innenkontur. Hierdurch wird ein Verdrehen des Grundkörpers 43 in der Lageröffnung 44 verhindert.

Die Figuren 12a und 12b zeigen wiederum die Kippvorrichtung 10 mit dem darin aufgenommenen ersten Behälter B1 und die Figuren 13a und 13b die Kippvorrichtung 10 mit dem zweiten Behälter B2. In den Figuren 12a und 12b befinden sich die Aufnahmeeinheiten 41a, 41b der Aufnahmen 20 der beiden Kipparme 11a, 11b in ihrer ersten Arbeitsposition, in welcher die Kippvorrichtung 10 die für die Aufnahme des größeren Behälters B1 erforderliche erste Aufnahmeweite besitzt. Man erkennt, dass die Grundkörper 43 der Aufnahmeeinheiten 41a, 41b aus den Lageröffnungen 44 der Kipparme 11a, 11b hervorstehen.

Um nun die zweite Aufnahmeweite der Kippvorrichtung 10 einzustellen, werden die Aufnahmeeinheiten 41a, 41b in der Längsrichtung ihrer Grundkörper 43 translatorisch verschoben. Man erkennt aus den Figuren 13a und 13b, dass in der zweiten Position der Aufnahmen 20 der Grundkörper 43 der Aufnahmeeinheiten 41a, 41b weniger weit aus den Lageröffnungen 44 der Kipparme 11a und 11b hervortritt.

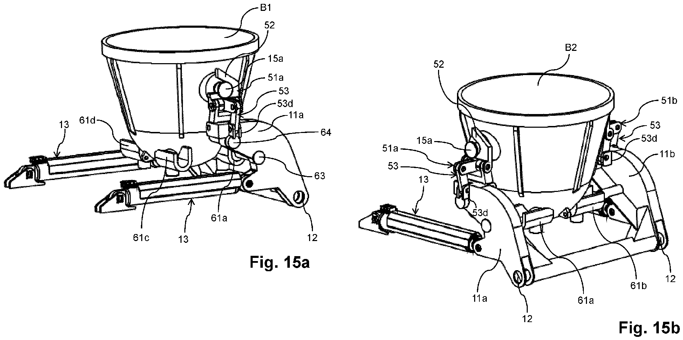

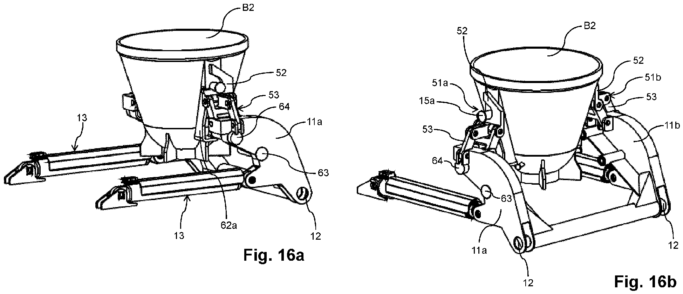

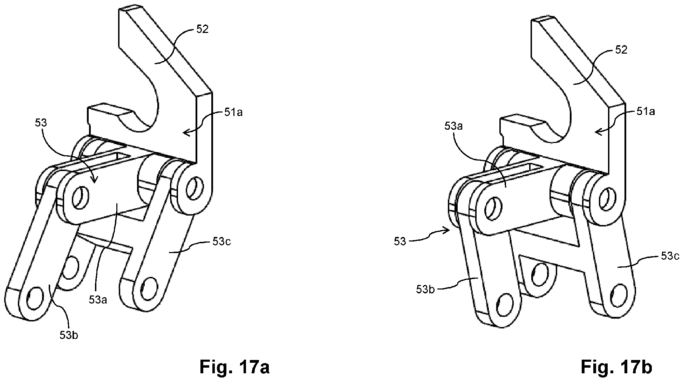

In den Figuren 15a bis 17b ist nun ein viertes Ausführungsbeispiel der Kippvorrichtung 10 dargestellt, wobei einander entsprechende Bauteile wiederum mit den gleichen Bezugszeichen versehen und nicht mehr näher beschrieben werden. Die Figuren 15a und 15b zeigen die Kippvorrichtung 10 mit dem ersten Behälter B1, die Figuren 16a und 16b die Kippvorrichtung 10 mit dem zweiten Behälter B2 und die Figuren 17a und 17b ein den Aufnahmeeinheiten der vorstehend beschriebenen Ausführungsbeispiele entsprechende Aufnahmeeinheit 51a, welche - wie nachstehend beschrieben - beweglich am ersten Kipparm 11a befestigt ist. Die zweite Aufnahmeeinheit 51b entspricht ihrem Aufbau nach der in den Figuren 17a und 17b gezeigten ersten Aufnahmeeinheit 51a. Der Unterschied zwischen dem vierten Ausführungsbeispiel und den vorher beschriebenen ersten drei Ausführungsbeispielen besteht wiederum in der Ausgestaltung der Aufnahmeeinheiten 51a, 51b der Aufnahmen 20 der Kipparme 11a, 11b und, daraus folgend, aus der daraus resultierenden Kinematik beim Übergang zwischen der ersten und der zweiten Arbeitsposition der Aufnahmeeinheiten 51a, 51b zur Einstellung der ersten und der zweiten Aufnahmeweite der Kippvorrichtung 10.

Auch hier weisen die Aufnahmeeinheiten 51a, 51b - wie beim dritten Ausführungsbeispiel - wiederum nur eine Aufnahmeklaue 52 auf, welche sowohl zur Aufnahme des ersten Behälters B1 als auch des zweiten Behälters B2 dient. Die Aufnahmeklaue 52 ist jeweils drehbeweglich an einem parallelogrammartigen Grundkörper 53 angeordnet, welcher ein Längsglied 53a und zwei Querglieder 53b und 53c besitzt, welche jeweils mit einem Ende gelenkig am Längsglied 53a angeordnet sind.

Wie am besten aus den Figuren 15a bis 16b ersichtlich ist, ist in jedem Kipparm 11a, 11b ein Querträger 53d angeordnet, an welchem die Querglieder 53b, 53c des Grundkörpers 53 der Aufnahmeeinheiten 51a, 51b gelenkig befestigt sind. Durch diesen Querträger 53d und die Querglieder 53b, 53c wird somit eine parallelogrammartige Führung für die Aufnahmeklaue 52 der Aufnahmeeinheiten 51a, 51b ausgebildet, welche es erlaubt, durch eine entsprechende Verstellbewegung die Aufnahmeweite der Kippvorrichtung 10 zu verändern.

Durch ein Verschwenken der Aufnahmeeinheiten 51a, 51b von ihrer in Figur 15a, 15b gezeigten ersten Arbeitsposition in ihre in Figur 16a, 16b gezeigte zweite Arbeitsposition wird die Kippvorrichtung 10 von ihrer ersten Aufnahmeweite in ihre zweite Arbeitsposition übergeführt, in der sie die geringere zweite Aufnahmeweite besitzt.

Bei der vorstehenden Beschreibung wurde davon ausgegangen, dass beide Kipparme 11a, 11b jeweils eine relativ zum betreffenden Kipparm 11a, 11b bewegbare Aufnahmeeinheit 21a, 21b bzw. 31a, 31b bzw. 41a, 41b bzw. 51a, 51b besitzen, so dass eine Änderung der Aufnahmeweite der Kippvorrichtung 10 durch eine Bewegung beider Aufnahmeeinheiten 21a, 21b bzw. 31a, 31b bzw. 41a, 41b bzw. 51a, 51b erfolgt. Es ist aber durchaus auch möglich, dass eine derartige Aufnahmeeinheit 21a, 21b bzw. 31a, 31b bzw. 41a, 41b bzw. 51a, 51b nur an einem Kipparm 11a oder 11b vorgesehen ist. Dies kann z. B. dann ausreichend sein, wenn der Unterschied zwischen den Spannweiten D und d der Behälter B1 und B2 nur geringfügig ist, so dass die erforderliche Änderung der Aufnahmeweiten nur durch die Bewegung eines einzigen Aufnahmeelements erzielt werden kann. Eine derartige Ausgestaltung ist zwar möglich, wird aber nicht bevorzugt, da sie in der Regel zu einer einseitigen Verteilung der von der Kippvorrichtung 10 aufzunehmenden Last des von ihr transportierten Behälters B1, B2 führt.

Die vorstehend beschriebenen Ausgestaltungen der Kippvorrichtung 10 erlauben ein Aufladen und ein Abladen eines absetzbaren Behälters B1, B2. Um nun auch ein Auskippen eines derartigen zwischen den Kipparmen 11a, 11b aufgenommenen Behälters B1 oder B2 zu ermöglichen, weisen die Behälter B1 und B2 in an und für sich bekannter Art und Weise Verriegelungselemente auf, welche mit entsprechenden Behälterverriegelungseinrichtungen der Kipparme 11a, 11b zusammenwirken.

Der in den Figuren 2a und 2b dargestellte erste Behälter B1 weist in an und für sich bekannter Art und Weise ein vorderes Paar und ein hinteres Paar von - hier taschenförmigen - Verriegelungselementen 61a, 61b und 61c, 61d auf, so dass der Behälter B1 in an und für bekannter Art und Weise in zwei unterschiedlichen Orientierungen in die Kippvorrichtung 10 einsetzbar ist.

Der in den Figuren 3a und 3b dargestellte erste Behälter B2 weist als Verriegelungselement an beiden Seiten jeweils einen Steg 62a, 62b auf.

Bei den bekannten Kippvorrichtungen, welche - wie beschrieben - nur zur Aufnahme ein und desselben Behälters ausgelegt waren, waren die Behälterverriegelungseinrichtungen an den Kipparmen 11a, 11b, welche zum Verriegeln des in der Kippvorrichtung 10 aufgenommenen Behälters dienten, ebenfalls auf die Verriegelungsaufnahmen dieses Behälters abgestimmt. Da mit der hier beschriebenen Kippvorrichtung 10 unterschiedlich konfigurierte Behälter B1 und B2 nicht nur aufgenommen und abgesetzt, sondern vorzugsweise auch gekippt werden sollen, ist es in der Regel erforderlich, dass die entsprechende Kippvorrichtung 10 auch über zwei unterschiedliche Verriegelungseinrichtungen für die Verriegelungsaufnahmen der Behälter B1 und B2 verfügt.

Die bei der beschriebenen Kippvorrichtung 10 eingesetzten Verriegelungseinrichtungen 63 und 64 werden anhand des ersten Ausführungsbeispiels beschrieben, da die Kipparme 11a, 11b bei den anderen Ausführungsbeispielen gleich aufgebaut sind, erübrigt sich eine Beschreibung der weiteren Ausführungsbeispiele.

Die erste Verriegelungseinrichtung 63 dient zur Verriegelung des ersten Behälters B1 in der Kippvorrichtung 10 und die zweite Verriegelungseinrichtung 64 erlaubt es, den zweiten Behälter B2 bei einer Verschwenkbewegung der Kippvorrichtung 10 in dieser derart Lage zu fixieren, dass bei einer Kippbewegung der Kippvorrichtung 10 der in ihr aufgenommene Behälter B1, B2 mitgenommen wird, so dass hierdurch ein Auskippen des Behälters B1, B2 ermöglicht ist. Die erste Verriegelungseinrichtung 63 wirkt hierbei - abhängig von der Orientierung des in der Kippvorrichtung 10 aufgenommenen Behälters B1 - entweder mit dem vorderen Paar von Verriegelungselementen 61a, 61b oder dem hinteren Paar von Verriegelungselementen 61c, 61d zusammen. Hierzu kann vorgesehen sein, dass die erste Verriegelungseinrichtung 63 zwei jeweils an einem Kipparm 11a, 11b befestigte ausfahrbare Kolben (nicht gezeigt) aufweist, die in die entsprechenden Verriegelungselemente 61a, 61b oder 61c, 61d eingreifen. In entsprechender Art und Weise wirkt die zweite Verriegelungseinrichtung 64 mit den Verriegelungselementen 62a, 62b des zweiten Behälters B2 zusammen.

Zusammenfassend ist festzuhalten, dass durch die beschriebenen Maßnahmen in vorteilhafter Art und Weise eine Kippvorrichtung 10 ausgebildet wird, welches in einfacher Art und Weise erlaubt, die Aufnahmeweite der Kippvorrichtung 10 zu verändern, so dass in ein und dieselbe Kippvorrichtung 10 Behälter unterschiedlicher Konfigurationen, insbesondere unterschiedlichen Durchmessers, einsetzbar sind. Es ist somit bei einem eine derartige Kippvorrichtung 10 verwendenden Transportfahrzeug 1 möglich, Behälter B1, B2 mit unterschiedlichen Spannweiten D, d zu transportieren, insbesondere aufzunehmen, abzuladen und vorzugsweise auszukippen.

## Patentansprüche

1. Kippvorrichtung für einen absetzbaren Behälter (B1, B2), welcher zur Aufnahme von mindestens 40 Tonnen, vorzugsweise von mindestens 50 Tonnen, Flüssigmetall und/oder Schlacke, insbesondere von Flüssigmetall und/oder Schlacke mit einer Temperatur von 700°C bis 1250°C, vorzugsweise von 800°C bis 1200°C, ausgebildet ist, die beabstandet voneinander angeordnete, jeweils um ein Gelenk (12) schwenkbare Kipparme (11a, 11b) aufweist, wobei an jedem dem entsprechenden Gelenk (12) abgewandten Ende der Kipparme (11a, 11b) jeweils eine Aufnahme (20) für den absetzbaren Behälter (B1, B2) vorgesehen ist, in welche Aufnahmeelemente (15a, 15b) des Behälters (B1, B2) aufnehmbar sind, **dadurch gekennzeichnet, dass** mindestens ein Kipparm (11a, 11b) der Kippvorrichtung (10) eine an ihm beweglich angeordnete Aufnahmeeinheit (21a, 31a, 41a, 51a; 21b, 31b, 41b, 51b) aufweist, durch welche der Abstand der Aufnahmen (20) der Kipparme (11a, 11b) von einer ersten Aufnahmeweite der Kippvorrichtung (10) in mindestens eine weitere Aufnahmeweite veränderbar ist.

2. Kippvorrichtung nach Anspruch 1, **dadurch gekennzeichnet, dass** die oder mindestens eine der Aufnahmeeinheiten (21a, 31a, 41a, 51a; 21b, 31b, 41b, 51b) von mindestens einer ersten Arbeitsposition, in welcher die Kippvorrichtung (10) die erste Aufnahmeweite besitzt, in mindestens die weitere Arbeitsposition, in welcher die Kippvorrichtung (10) die weitere Aufnahmeweite besitzt, bewegbar ist.

3. Kippvorrichtung nach Anspruch 1, **dadurch gekennzeichnet, dass** die oder mindestens eine der Aufnahmeeinheiten (21a, 31a, 41a, 51a; 21b, 31b, 41b, 51b) lösbar angeordnet sind, so dass durch einen Austausch der Aufnahmeeinheiten (21a, 31a, 41a, 51a; 21b, 31b, 41b, 51b) die Aufnahmeweite der Kippvorrichtung (10) veränderbar ist.

4. Kippvorrichtung nach einem der vorangehenden Ansprüche, **dadurch gekennzeichnet, dass** zwei Kipparme (11a, 11b) jeweils eine Aufnahmeeinheit (21a, 31a, 41a, 51a; 21b, 31b, 41b, 51b) aufweisen.

5. Kippvorrichtung nach einem der vorangehenden Ansprüche, **dadurch gekennzeichnet, dass** mindestens eine Aufnahmeeinheit (21a, 31a, 41a, 51a; 21b, 31b, 41b, 51b) mindestens eine Aufnahmeklaue (22a, 22b; 32a, 32b; 42; 52a, 52b) besitzt.

6. Kippvorrichtung nach einem der Ansprüche 1 bis 5, **dadurch gekennzeichnet, dass** mindestens eine Aufnahmeeinheit (21a, 31a, 41a, 51a; 21b, 31b, 41b, 51b) mindestens zwei Aufnahmeklauen (22a, 22b; 32a, 32b; 42; 52a, 52b) aufweist, die in axialer Richtung der Kippvorrichtung (10) zueinander versetzt angeordnet sind.

7. Kippvorrichtung nach einem der vorangehenden Ansprüche, **dadurch gekennzeichnet, dass** mindestens eine Aufnahmeeinheit (21a, 31a, 41a, 51a; 21b, 31b, 41b, 51b) durch eine rotatorische und/oder eine translatorische Bewegung zwischen der ersten Arbeitsposition und der zweiten Arbeitsposition bewegbar sind.

8. Kippvorrichtung nach einem der vorangehenden Ansprüche, **dadurch gekennzeichnet, dass** mindestens eine Aufnahmeeinheit (21a, 31a, 41a, 51a; 21b, 31b, 41b, 51b) einen Grundkörper (23; 33; 43; 53) aufweist, an dem mindestens eine Aufnahmeklaue (22a, 22b; 32a, 32b; 42; 52a, 52b) angeordnet ist.

9. Kippvorrichtung nach einem der vorangehenden Ansprüche, **dadurch gekennzeichnet, dass** der Grundkörper (23; 33; 43; 53) der Aufnahmeeinheit (21a, 31a, 41a, 51a; 21b, 31b, 41b, 51b) rotatorisch und/oder translatorisch im Kipparm (11a, 11b) bewegbar ist.

10. Kippvorrichtung nach einem der vorangehenden Ansprüche, **dadurch gekennzeichnet, dass** mindestens ein Kipparm (11a, 11b) mindestens eine Verriegelungseinrichtung (63, 64) für den absetzbaren Behälter (B1, B2) besitzt.

11. Transportvorrichtung, insbesondere Schwerlast-Transportfahrzeug (1), mit einer Kippvorrichtung (10) zur Aufnahme eines absetzbaren Behälters (B1, B2), **dadurch gekennzeichnet, dass** die Kippvorrichtung (10) nach einem der Ansprüche 1 bis 10 ausgebildet ist.

12. Transportsystem mit einer Transportvorrichtung (1) nach Anspruch 11 und mindestens einem absetzbaren Behälter (B1, B2), welcher zur Aufnahme von mindestens 40 Tonnen, vorzugsweise von mindestens 50 Tonnen Flüssigmetall und/oder Schlacke, insbesondere von Flüssigmetall und/oder Schlacke mit einer Temperatur von 700°C bis 1250°C, vorzugsweise von 800°C bis 1200°C, ausgebildet ist.

13. Transportsystem nach Anspruch 12, **dadurch gekennzeichnet, dass** der Behälter (B1, B2) ein Aufnahmevolumen von mindestens 12 m³ aufweist.

14. Transportsystem nach Anspruch 12 oder 13, **dadurch gekennzeichnet, dass** der Behälter (B1, B2) zumindest bereichsweise, vorzugsweise insgesamt, aus Gusseisen ausgebildet ist.

15. Transportsystem nach einem der Ansprüche 12 bis 14, **dadurch gekennzeichnet, dass** der Behälter (B1, B2) zumindest bereichsweise eine Wandstärke im Bereich von 0,05 m bis 0,20 m, vorzugsweise von 0,1 m bis 0,2 m aufweist.
